# EUROPEAN PATENT SPECIFICATION

(11) **EP 3 576 539 B1**
(45) Date of publication and mention of the grant of the patent: **21.07.2021**
(21) Application number: 18703012.7
(22) Date of filing: 02.02.2018
(51) Int. Cl.: A21D 2/16, A21D 13/068, A23L 29/10

(54) **NON-FAT-BLOOM COMESTIBLE PRODUCT**
LEBENSMITTELPRODUKT OHNE FETTREIF
PRODUIT COMESTIBLE SANS BLANCHIMENT GRAS

(30) Priority: 03.02.2017 EP 17305125
(43) Date of publication of application: 11.12.2019
(73) Proprietor: Generale Biscuit, 92140 Clamart (FR)
(72) Inventor: RABAULT, Jean-Luc, 92140 Clamart (FR); PRICE, Wayne, Reading Berkshire RG6 6LA (GB)
(74) Representative: Boult Wade Tennant LLP
(86) International application number: PCT/EP2018/052708
(87) International publication number: WO 2018/141934

(56) References cited:
- US-A- 4 894 246
- US-A- 5 023 099
- US-A- 5 080 920
- R. JYOTSNA ET AL: "Improvement of Rheological and Baking Properties of Cake Batters with Emulsifier Gels", JOURNAL OF FOOD SCIENCE, vol. 69, no. 1, 1 January 2004 (2004-01-01), pages SNQ16-SNQ19, XP055077349, ISSN: 0022-1147, DOI: 10.1111/j.1365-2621.2004.tb17880.x
- TALBOT G: "Chocolate fat bloom - the cause and the cure", INTERNATIONAL FOOD INGREDIENTS, XX, XX, no. 1, 1 January 1995 (1995-01-01), pages 40-45, XP009030792,

## Description

The present invention relates to a comestible bakery product which contains one or more sources of cocoa butter (CB) or cocoa butter equivalent (CBE). It has been found that prior art products of this type may suffer from unwanted fat bloom on a surface of a bakery portion. The invention relates to comestible products, such as cookies, biscuits and soft cakes, which do not suffer from this unsightly bloom on a surface of a continuous bakery portion.

Fat bloom is the uncontrolled recrystallisation of fats in comestibles. Fat bloom is well known in chocolate and chocolate compounds, where fat migration and the polymorphism of CB or CBEs lead to the uncontrolled recrystallisation of fat. The recrystallised fat is often visible to the naked eye, resulting in an unpleasant or mouldy appearance.

Fat bloom in chocolate and chocolate compounds is a complex problem and it is often difficult to identify the exact cause. However, some factors are known to increase the likelihood of bloom. Increasing the mobility of the fat in the chocolate or creating contact between the chocolate or chocolate compound and another high fat material having a different composition is known to promote fat bloom due to undesirable, often inevitable fat migration. The inclusion of chocolate or chocolate compounds in baked goods, or enrobing fillings with chocolate to form confectionery products, leads to such contact between the chocolate or chocolate compound and the other fat containing materials which may result in bloom on the chocolate or chocolate compound surface and even on the non-chocolate surfaces.

Traditionally, biscuits containing sources of CB or CBE in the dough, or within an inclusion like chocolate chips, are made with either butter or palm oil as the main dough fat. Butter and palm oil have approximately 65 and 50% saturated fatty acids respectively. These relatively high saturated fats (the level of saturation of a fat is measured by the level of saturation of its fatty acids) avoid fat bloom by accelerating the crystallisation of the CB, which is entrapped in their fat network. This entrapment avoids any subsequent fractionation and recrystallisation. Other classical solutions are to use other fats with at least 50% saturated fatty acids; or partially hydrogenated oils or animal fats, both containing some trans fatty acids (TFA). These TFA have a high compatibility with CB and have been shown to mitigate the impact of fat bloom. However, TFA are known to be undesirable for the general health and well-being of the consumer. There is an increasing need to use more unsaturated fats with no TFA in bakery products.

CB or CBE have limited compatibility with most other fats and oils. CB and CBE are prone to phase separation in the product overtime when the fat mobility is above a certain level, due for instance to either the use of a more liquid fat (*i.e.* one having a lower solid fat content) or due to the use of higher storage temperatures. This separation may be further exacerbated because the fat is hydrophobic and tends to limit its interaction with the hydrophilic ingredients inside the biscuit. Thus, this phase separation or fractionation often leads to the CB or CBE recrystallising on the surface of the product. This crystallisation is immediately apparent to the consumer and results in complaints of a 'mouldy' appearance. The problem is made worse by increasing the amount of CB or CBE in the product, because there is more fat to recrystallise, and/or by decreasing the amount of saturated fat in the dough, because of a decreased compatibility with the CB or CBE and a reduction in the fat structuring effects.

EP 0206850 discloses soft cookies comprising flavour chips (such as chocolate chips) and is focused on reducing bloom on the surface of the chips. The reduction in bloom is achieved by coating the flavour chip particles with a low-melting shortening or fat during mixing. The water in the soft cookie is repelled from the surface of the flavour chips. It is believed that this prevents dissolution of sugar in the chips and subsequent recrystallization of the sugar on the chip surface, thereby avoiding sugar bloom and nucleation sites for fat crystals (which lead to fat bloom). The low-melting shortening or fat is preferably partially hydrogenated and therefore contains a significant proportion of TFA. As noted above, TFAs have a high compatibility with CB (and thereby mitigate fat bloom) but are undesirable from a health perspective.

Another strategy to mitigate the problem of bloom in CB/CBE-containing comestible products is to make baked goods with a very pale appearance. This makes the observation of any bloom difficult to see on a surface of the bakery portion. This strategy is often unacceptable due to the need for baked goods with a darker appearance, for instance containing cocoa, malt, or caramel or for products which have been the subject of intense Maillard reactions.

The problem of fat bloom on the surface of the continuous bakery portion is greatly enhanced when the continuous bakery portion (i) contains a more unsaturated fat (*i.e.* one which is more liquid), like rapeseed oil, and (ii) has a darker colour.

Finally, it is known to replace real chocolate (containing CB) with a cocoa butter replacer (CBR) compounds. CBRs are non-tempering fats and typically crystallise more readily into a stable formation. This means that there is less phase separation and less uncontrolled crystallisation on the surface, resulting in less fat bloom.

US 4894246 A relates to processes and dough compositions for producing cookies containing low-melting fat.

US 5023099 A relates to a method for producing soft cookies having bloom resistance.

US 5080920 A relates to bloom resistant cookies.

Accordingly, it is desirable to provide an alternative comestible product having bloom resistance and/or tackle at least some of the problems associated with the prior art or, at least, to provide a commercially useful alternative thereto. In particular, it is desirable to provide a solution to increase bloom resistance in a comestible product comprising one or more sources of CB and/or CBE in a continuous bakery portion e, even when the fat composition of continuous bakery portion has a tendency to promote bloom.

According to a first aspect there is provided a comestible product comprising a continuous bakery portion and, optionally, one or more discrete inclusions,
wherein the continuous bakery portion has a total fat content of less than 30 wt% and comprises:
   (i) one or more sources of cocoa butter or cocoa butter equivalent in a total amount of from 0.5 to 10wt%, and
   (ii) a sorbitan monoester selected from the group consisting of sorbitan monomyristate, sorbitan monopalmitate, sorbitan monostearate, sorbitan monoarachidate, and mixtures of two or more thereof,
wherein the continuous bakery portion comprises less than 5 wt% trans fatty acids by weight of the fatty acids present in the continuous bakery portion, and
less than 45 wt% saturated fat by weight of the fatty acids present in the continuous bakery portion, wherein the sorbitan monoester is present in an amount of from 0.2 wt% to 3 wt% of the continuous bakery portion, and wherein the comestible product is a soft cake, a cookie or a biscuit.

Sorbitan monoesters are known to prevent bloom in chocolate products. However, this can only be achieved by means of a controlled, rigorous process involving fully melting the sorbitan monoester in the chocolate and co-crystallising the sorbitan monoester and the chocolate under specific conditions to control the polymorphism of the chocolate. Surprisingly, the present inventors have found that the inclusion of specific sorbitan monoesters as described herein in the continuous bakery portion of a comestible product serves to reduce the likelihood of bloom formation on the surface of the continuous bakery portion, despite not having been first melted and mixed, then co-crystallised with the CB/CBE, and despite the fact that the bloom is formed on the dough itself, rather than on the chocolate. The present inventors have found that the sorbitan monoesters described herein are effective in reducing the likelihood of bloom formation even when the fat composition of the continuous bakery portion would normally increase the likelihood of bloom (e.g. low in saturated fat and low in TFA).

The present invention relates to a comestible product, wherein the comestible product is a soft cake, a cookie or a biscuit.

The comestible product includes a continuous bakery portion. A bakery portion is one made by the cooking, preferably by baking in an oven, of a dough (typically viscous) or a batter (generally more liquid). Depending on the moisture content of the bakery portion and/or the inclusion of polyols, the bakery portion can be considered as:
- "dry" (typically having less than 6wt% moisture and are hard and crunchy/crispy). Such dry products are referred to herein "biscuits and cookies"; or
- "soft" (typically containing more than 6wt% moisture, but having an Aw of below 0.85). Such soft portions often include added polyols, in particular if their Aw is below 0.8. The measurement of Aw is well known in the art. By soft it is meant that the product can be very soft or just not crunchy/crispy. Such soft products are referred to herein "soft cakes".

The comestible product is a soft cake, a cookie or a biscuit.

The comestible product may be in the form of a filled, layered or sandwich product. By a filled bakery product it is meant that the bakery product is provided with a filling or coating layer on at least one surface, or with a filling or coating layer within a cavity (open or closed) or with a filling or coating layer linking two or more bakery products together. For example, a sandwich biscuit may be considered as filled because the filling is provided between two biscuit portions. Preferably the comestible product is a single serving size and is preferably, but not always, provided in an individually wrapped form. Alternatively the single serving size may comprise several of the comestible product, such as 2 to 6, and these may be wrapped together.

As noted above, the comestible product described herein comprises a continuous bakery portion. The continuous bakery portion forms preferably the majority of the product, *i.e.* at least 50wt% thereof (preferably at least 75wt% thereof and, optionally 100wt% thereof) and typically forms the supporting structure (such as a biscuit portion in a chocolate biscuit), and may further be supplemented by a partial coating *i.e.* leaving a portion of the continuous bakery portion visible to the consumer, a filling, such as a creme or ganache, or discrete inclusions included within the continuous bakery portion of the comestible product. For example, the comestible product may take the form of a chocolate chip cookie where the discrete chocolate chips are surrounded by the continuous bakery portion of the baked cookie derived from a dough formulation. As will be appreciated, the inclusions may be within the continuous bakery portion but still present on and visible at a surface of the comestible product.

The one or more discrete inclusions, where present, may be selected from such ingredients as nuts, jellies, nougat, honeycomb, flavoured chips such as chocolate chips, coconut, toffee, oats, seeds, caramel, fudge, hard candy, marshmallows, cherries, raisins and dried fruit, or mixtures of two or more thereof. Examples of nuts include hazelnuts, peanuts, almonds and the like. Examples of dried fruit include raisins and dried pieces of apple, pear or banana. Preferably the discrete inclusions have an average particle size of from 1 to 15 mm, more preferably from 2 to 10 mm and most preferably from 3 to 8 mm.

Chocolate chips, as referred to herein, include any solid chocolate piece inclusion, and may be referred to, for example, as pieces, chunks, chips, drops, or vermicelli. A chocolate compound as referred to herein may be used for chocolate-like inclusions. A chocolate compound is an imitation of chocolate but which cannot be called chocolate since it does not fulfil the regulations required for the chocolate standard of identity. Chocolate compounds are usually cheaper than chocolate. Quite often, this reduction in cost is due to the use of different fats. There are three main groups of chocolate compounds, differing by the type of fat used: CBE compounds (which, like chocolate, must be tempered), and on the other hand cocoa butter replacers (CBR) and cocoa butter substitutes (CBS) which do not require tempering. Chocolate compound is a technical term and the final name for the consumer varies depending on country or suppliers (imitation of chocolate, "pâte a glacer" in French, cocoa coating or glazing, etc.).

For the avoidance of doubt, the discrete inclusions, together with any coating or filling do not form a part of the continuous bakery portion when considering the amount of ingredients in the continuous baked portion, such as the sorbitan monoester or the source of fat. When discussing the comestible product *per se,* this includes any inclusions, coating and filling. Unless otherwise specified, all percentages herein are by weight.

The continuous bakery portion comprises one or more sources of CB or CBE in a total amount of from 0.5 to 10 wt%. Preferably, the one or more sources of cocoa butter or cocoa butter equivalent are present in a total amount of from 1 to 10 wt% by weight of the continuous bakery portion, more preferably from 2 to 8 wt%. Relatively high concentrations of CB or CBE are associated with an increased risk of bloom. The source of CB or CBE may be, for example, a cocoa powder for providing a dark chocolate product. The source may also be chocolate or cocoa liquor which can both be mixed in liquid form through a dough before baking; such ingredients used in this way form a part of the continuous baked portion. The product may further comprise one or more additional sources of CB or CBE. For example, the product may further comprise one or more additional sources of CB or CBE in the one or more inclusions (such as chocolate chips), where present. Alternatively or in addition, the product may further comprise one or more additional sources of CB or CBE in a coating or filling, the coating or filling being provided on or within the continuous bakery portion respectively.

CB is well known and may be found as a component of composite ingredients including cocoa powder, cocoa liquor (also called cocoa mass), and chocolate. The CB or CBE amounts in the comestible product will vary depending on the desired product.

CBEs are well known in the art and their use in food stuffs, particularly confectionery, is increasing as the global demand for cocoa butter exceeds its production. CBEs are defined in scientific terms in various food standards documents and in some jurisdictions a percentage of cocoa butter equivalents may replace cocoa butter without losing the right to describe the product as chocolate. European Union regulations define CBEs as: non-lauric vegetable fats, rich in symmetrical monounsaturated triglycerides; miscible, in any proportion, with cocoa butter; compatible with its physical properties (melting point, crystallisation temperature, melting rate and need for tempering phase, *i.e*. they are polymorphic); obtained by the processes of refining and/or fractionation, which excludes enzymatic modification of the triglyceride structure. Common sources of CBEs include shea, illipe, sal, kokum gurgi, mango kernels and palm oils. CBE may be used to replace some or all of the cocoa butter in comestible ingredients. CBEs are distinct from CBR and CBS, which are both non-tempered fats well-known terms in the art.

Although CBE are sometimes said to have physical properties equivalent to cocoa butter, there are soft and hard CBEs. Cocoa Butter Improvers (CBI) is a specific class of CBE, being much harder than CB itself, and melting at a higher temperature and are used to improve temperature tolerance of chocolate. There are also fats which have the same physical and chemical characteristics of CB, CBE or CBI, but are obtained in a way not allowed by the various local chocolate regulations / Codex (because of other vegetable origin, due to too much specific minor lipid components or due to the use of hydrogenation or interesterification for instance; or produced by GMO algae): if they are used, even at less than 5%, the product cannot be labelled chocolate.

The common point of these CB, CBE/CBI is that they are called tempered fats. These are polymorphic fats stable in beta form. Tempering is mandatory to allow for a quick crystallisation to form small fat crystals and in a stable beta form. The use of any other polymorphic fat, *i.e.* palm mid fractions would also exhibit the same problem described herein.

The term CBE as used herein encompasses CBIs and the fats which have similar physical and chemical characteristics but do not comply with regulations to be called CBE or for being permitted in the relevant chocolate standard of identity. It also includes fat-rich products/components rich in tempered fats, but being less purified fractions than CBE like palm mid fractions or shea stearin.

Preferably the terms CBE and CB as used herein are given their strict definition.

As noted above, the continuous bakery portion of the comestible product comprises one or more sources of CB or CBE. That is, the continuous bakery portion of the comestible product comprises a source of CB or CBE such as, for example, a cocoa powder finely distributed throughout the dough mix used to form the continuous bakery portion. Cocoa powder or mass comprises cocoa butter and non fat cocoa solids. In comestible products comprising one or more sources of CB or CBE in the continuous bakery portion (as opposed to merely in inclusions) and non fat cocoa solids, the disadvantages of bloom are exacerbated because it is more readily seen on the dark surface of the product. In order to provide a sufficiently dark surface for bloom formation to be readily visible, the continuous bakery portion will typically contain at least 1wt% of cocoa powder (non-defatted - typically 20-22% of fat - or defatted - less than 20% fat, typically 10-12% fat). The continuous bakery portion will preferably contain at most 15wt% of cocoa powder (defatted or non-defatted), preferably less than 10wt% and more preferably less than 7wt%. Preferably, the cocoa powder is alkalized. Alkalised cocoa powder is darker in colour than non-alkalised cocoa powder, so less is required to provide a dark colour to the product. However, the darker colour may exacerbate the appearance of any bloom by providing additional colour contrast.

As noted above, in some embodiments, the comestible product further comprises one or more discrete inclusions. Preferably, the one or more discrete inclusions comprise a source of CB or CBE. In other embodiments, the comestible product does not comprise one or more discrete inclusions.

Preferably the continuous bakery portion has a surface having a colour such that the presence of any fat bloom thereon would be readily discernible. The colour may be achieved by, for example, the addition of a source of non-fat cocoa (like cocoa powder), malt, caramel or intense Maillard reactions.

Preferably the source of CB or CBE is cocoa powder (defatted or non-defatted), chocolate (in molten form when stirred through the dough) or cocoa liquor.

The continuous bakery portion comprises a sorbitan monoester. The term "sorbitan monoester", as used herein, refers to a sorbitan monoester selected from the group consisting of sorbitan monomyristate, sorbitan monopalmitate, sorbitan monostearate, sorbitan monoarachidate, and mixtures of two or more thereof. Sorbitan monostearate is also known as SMS and is identified by the E-number in Europe E491. Sorbitan monopalmitate is also known as SMP and is identified by the E-number in Europe E495.The sorbitan monoesters described herein are known to have some bloom retarding function when included in chocolate or chocolate formulations. SMS is also known to act as an emulsifier in doughs, although usually other emulsifiers like lecithin, mono-diglycerids of fatty acids (E471), Datem (E472) or sodium / calcium Stearoyl-2 lactylate are preferred. The inventors have found that the use of a sorbitan monoester as described herein provides a bloom retarding function when included in the continuous bakery portion of a comestible product. In particular, the inventors have found that the use of a sorbitan monoester as described herein prevents bloom on the surface of the continuous bakery portion.

The continuous bakery portion comprises less than 5 wt% trans fatty acids by weight of the fatty acids present in the continuous bakery portion, preferably less than 3 wt%, more preferably less than 1 wt%. Preferably, the continuous bakery portion comprises at least 0.1 wt% trans fatty acids by weight of the fatty acids present in the continuous bakery portion. Preferably, excluding the one or more sources of cocoa butter or cocoa butter equivalent, the continuous bakery portion comprises less than 5 wt% trans fatty acids by weight of the fatty acids present in the continuous bakery portion, preferably less than 3 wt%, more preferably less than 1 wt%. Preferably, excluding the one or more sources of cocoa butter or cocoa butter equivalent, the comestible product comprises at least 0.1 wt% trans fatty acids by weight of the fatty acids present in the continuous bakery portion.

The continuous bakery portion comprises less than 45 wt% saturated fat by weight of the fatty acids present in the continuous bakery portion. Preferably, the continuous bakery portion comprises less than 40 wt% saturated fat by weight of the fatty acids present in the continuous bakery portion, more preferably less than 35 wt%, still more preferably less than 31 wt%, still more preferably less than 27 wt%, still more preferably less than 22 wt%, still more preferably less than 15 wt%, and still more preferably less than 10 wt%, and most preferably from 13 to 15 wt%.

Preferably, excluding the one or more sources of CB or CBE, the continuous bakery portion comprises less than 40 wt% saturated fat by weight of the fatty acids present in the continuous bakery portion. Preferably, excluding the one or more sources of CB or CBE, the continuous bakery portion comprises less than 30 wt% saturated fat by weight of the fatty acids present in the continuous bakery portion, more preferably less than 26 wt%, still more preferably less than 22 wt%, still more preferably less than 17 wt%, still more preferably less than 10 wt%, and most preferably from 8 to 10 wt%.

The present inventors have sought to provide a comestible product that is perceived to be healthy in the sense that it is low in saturated fats and trans fats. However, the inventors have found that this type of system has exacerbated problems associated with bloom formation on a surface of the product. This is particularly a problem when the product has a dark surface, such as the result of the inclusion of cocoa powder ingredients or following Maillard reactions to form a browned crust. Against these darker surfaces the formation of even very small amounts of bloom may be readily discerned.

Although it is known to include sorbitan monoesters in chocolate or chocolate compounds to prevent bloom formation, this can only be achieved with a controlled rigorous process including two steps:
- fully melting the sorbitan monoester (which must be at a temperature in excess of about 60°C, such as heating at 65 to 70°C) inside a fat continuous phase made of cocoa butter, which means heating the sorbitan monoester above its melting temperature during conching, and ensuring vigorous mixing for homogeneous liquid-liquid dispersion;
- co-crystallising the chocolate with the sorbitan monoester with specific heat treatment steps below 40ºC, under shear, to control the polymorphism of the chocolate.

The present inventors have found that the inclusion of a sorbitan monoester as described herein in the continuous bakery portion of such a comestible product serves to reduce the likelihood of bloom formation on the surface of the continuous bakery portion of the product. This is particularly surprising because it is able to prevent the bloom formation despite not having been first melted and mixed, then co-crystallised with the CB/CBE, and despite the fact that the bloom is formed on the dough itself, rather than on the chocolate. Moreover, it is surprising because the comestible product (e.g. a biscuit):
- is not a fat continuous matrix (whereas chocolate is fat continuous), but starts as an emulsion which is then dried during baking;
- is typically aerated thanks to the baking powders and baking process, leaving a very porous matrix;
- cannot be tempered and is usually cooled slowly to below 20°C, unlike chocolate.These characteristics lead to a very slow crystallisation of the fat phase *i.e.* CB/CBE, promoting large crystal growth, thus visible bloom.
- is using less saturated fats, and in some cases much less saturated, than in chocolate or chocolate compounds, and it is known that less saturated fats have a greater liquid fraction, enabling more oil mobility, fractionation and recrystallisation.
- Is stored at a less controlled temperature than chocolate, which is advised to be stored typically at 16-20°C.

The sorbitan monoester is present in an amount of from 0.2 to 3 wt%, preferably from 0.3 to 1.0 wt%. The present inventors have surprisingly found that the inclusion of a sorbitan monoester in the continuous bakery portion of a comestible product in an amount of up to 3 wt% by weight of the continuous bakery portion is effective in the prevention of fat bloom on a surface of said continuous bakery portion.

Without wishing to be bound by theory, it is believed that the bloom found in CB/CBE-containing baked products, such as chocolate chip cookies with cocoa powder in the dough, results from the migration of fat CB or CBE to the surface of the continuous bakery portion. This is believed to be a fractionation (i.e. the separation) of the CB/CBE main triglycerides (POP, POS and SOS) from the rest of the fat (because of limited compatibility), and its recrystallisation into large crystals (visible by the naked eye) on the surface of the baked good, due to slow and uncontrolled crystallisation, especially because of no tempering and no active cooling.

It is further believed that this is exacerbated by the use of fat which stays liquid at room temperature in the dough portion, the thermally abusive process of baking the product (which is much hotter than any chocolate manufacture) and the evaporation during and just after baking, which may displace some fat towards the surface. Nonetheless, the surprising effect of including a sorbitan monoester in the dough component is that, despite these conditions which encourage fat migration, the presence of bloom can be avoided.

The continuous bakery portion has a total fat content of less than 30 wt%. This is based on the weight of the continuous bakery portion. The provision of a low fat continuous bakery portion has advantages for the health of the consumer and helps to provide a desirable product. However, it can also lead to elevated risks of fat bloom due to initial higher ratio of (CB + CBE) / total fat in the bakery portion, or due to a quicker increase of this ratio following a migration from the CB or CBE source like chocolate chips. Where the fats are healthier fat sources, being more liquid at ambient temperature, they increase overall oil/fat mobility and can dissolve cocoa butter from chocolate chips, decrease their melting point and help finally more CB/CBE to come on the surface of the bakery portion to recrystallize.

In a preferred embodiment, the continuous bakery portion has a total fat content of at least 20 wt%, more preferably at least 24 wt%, still more preferably at least 28 wt%. Such a fat content is suitable for some types of soft cakes and similar products such as brownies. Such products also typically contain high levels of CB or CBE, meaning they are more susceptible to bloom formation. Accordingly, in some embodiments, such as brownies, the continuous bakery portion has a total fat content of at least 20 wt%, and the one or more sources of CB or CBE are present in a total amount of from 4 to 10 wt% by weight of the continuous bakery portion. More preferably, the continuous bakery portion has a total fat content of at least 24 wt%, and the one or more sources of CB or CBE are present in a total amount of from 5 to 8 wt% by weight of the continuous bakery portion. Still more preferably, the continuous bakery portion has a total fat content of at least 26 wt%, and the one or more sources of CB or CBE are present in a total amount of from 5 to 8 wt% by weight of the continuous bakery portion. It is to be understood that the total fat content includes the contribution provided by the CB or CBE.

Alternatively, for biscuits or cookies and the like, the continuous bakery portion preferably has a total fat content of less than 18 wt%, more preferably less than 15 wt%, still more preferably less than 12 wt%, and most preferably from 8 to 10 wt%.

Preferably the continuous bakery portion comprises a source of fat selected from the group consisting of non-hydrogenated canola oil, non-hydrogenated rapeseed oil, non-hydrogenated palm oil, non-hydrogenated shea olein, non-hydrogenated sunflower oil, non-hydrogenated corn oil, non-hydrogenated soybean oil, and mixtures of two or more thereof. Non-hydrogenated fats are known to contribute to fat migration and hence accelerate CB/CBE bloom. However, the present inventors have found that the use of sorbitan monoesters in the manner described herein reduces or prevents bloom even when non-hydrogenated oils are included.

Preferably, the continuous bakery portion does not comprise a partially hydrogenated fat or oil. Partially hydrogenated fats and oils are known to reduce the occurrence of bloom in CB/CBE-containing bakery products. However, the present inventors have found that it is not necessary to include such components in the products of the present disclosure owing to the efficacy of the sorbitan monoesters in reducing/eliminating bloom. Preferably the continuous bakery portion does not contain a fully hydrogenated fat or oil. Preferably, the continuous bakery portion does not contain a hydrogenated fat or oil.

Preferably the product or at least the continuous bakery portion does not contain palm oil or fractions of palm oil having 48% or more of saturated fatty acids, or at least contains less than 30 wt%, preferably less than 20wt%, more preferably less than 10wt%, more preferably less than 5wt% palm oil and/or such palm fractions.

Preferably the product or at least the continuous bakery portion does not contain any palm oil or any palm oil fraction, or at least contains less than 20wt%, more preferably less than 10wt%, more preferably less than 5wt% palm oil and/or palm oil fraction.

Preferably the product or at least the continuous bakery portion does not contain animal fat, or at least contains less than 4wt%, more preferably less than 2wt%, still more preferably less than 1wt% animal fat based on the weight of the continuous bakery portion. Exemplary animal fats include milk fat, lard and tallow.

Preferably the moisture content of the comestible product is less than 6 wt% of the product, more preferably less than 3 wt%, although this can vary depending on product type. For example, for biscuits and cookies, the moisture content is preferably less than 4 wt% of the product, more preferably less than 2 wt%. On the other hand, for soft cakes, brownies and the like, the moisture content is preferably less than 25 wt% of the product, more preferably from 10 to 18 wt%.

In a further embodiment the comestible further comprises a filling and/or a partial coating. As noted above, the filling and/or partial coating, if present, may comprise a source of CB or CBE. Preferably the source of CB or CBE comprises cocoa powder. Preferably the partial coating is a chocolate or chocolate compound coating.

Preferably the product has a post-baked slowly available glucose content of at least about 15g per about 100g of the product, more preferably at least 16.5g/100g of product, more preferably at least 18.0g/100g, still more preferably at least 21.0g/100g.

It is believed that slowly digestible starch gives a higher health benefit than rapidly digestible starch. Indeed, rapidly digestible starch is rapidly broken down into glucose during digestion and thus rapidly made available to the body. Therefore, the blood glucose level rapidly increases. This can trigger an increased insulin delivery leading to some storage in adipose tissues. Consequently, energy can only be provided for a shorter time. On the contrary, slowly digestible starch is slowly assimilated by the body. Consequently, energy can be provided for a longer time.

SDS or slowly available glucose (SAG) can be characterised through the slowly available glucose (SAG) measurement by Englyst method ("Rapidly Available Glucose in Foods: an In Vitro Measurement that Reflects the Glycaemic Response", Englyst et al., Am. J. Clin. Nutr., 1996 (3), 69(3), 448-454; "Glycaemic Index of Cereal Products Explained by Their Content of Rapidly and Slowly Available Glucose", Englyst et al., Br. J. Nutr., 2003(3), 89(3), 329-340; "Measurement of Rapidly Available Glucose (RAG) in Plant Foods: a Potential In Vitro Predictor of the Glycaemic Response", Englyst et al., Br. J. Nutr., 1996(3), 75(3), 327-337). SAG refers to the amount of glucose (from sugar and starch, including maltodextrins) likely to be available for slow absorption in the human small intestine. The SDS content equals the SAG content when there is no other SAG source than starch, i.e. SDS. Rapidly available glucose (RAG) refers to the amount of glucose likely to be available for rapid absorption in the human small intestine.

In Englyst method, product samples are prepared by manually and roughly grinding one or more of the products. The samples are then subjected to an enzymatic digestion by incubation in presence of invertase, pancreatic alpha-amylase and amyloglucosidase under standardised conditions. Parameters such as pH, temperature (37 °C), viscosity and mechanical mixing are adjusted to mimic the gastrointestinal conditions. After an enzymatic digestion time of 20 min, glucose is measured and is labelled RAG. After an enzymatic digestion time of 120 min, glucose is again measured and is labelled available glucose (AG). SAG is obtained by subtracting RAG from AG (SAG = AG - RAG), thus, SAG corresponds to the glucose fraction released between the 20th and the 120th minute. Free glucose (FG), including the glucose released from sucrose, is obtained by separate analysis. RDS is then obtained as the subtraction of FG from RAG (RDS = RAG - FG).

Preferably, the continuous bakery portion has a total humectant content of less than 10 wt%, more preferably less than 5 wt%, still more preferably less than 3 wt% and most preferably from 0.5 to 2 wt%. Suitable humectants include polyols such as glycerol and propylene glycol, monosaccharide polyols like erythritol, xylitol, sorbitol and mannitol, and disaccharide polyols like maltitol and lactitol. Preferably the continuous bakery portion has a total polyol content of less than 10 wt%, more preferably less than 5 wt%, still more preferably less than 2 wt%. The continuous bakery portion preferably does not contain polyols.

According to a further aspect there is provided a method of producing a comestible product, the method comprising:
(a) preparing a dough, and
(b) baking the dough to form one or more comestible products,
wherein the baked dough has a total fat content of less than 30 wt% and comprises:
(i) one or more sources of cocoa butter or cocoa butter equivalent in a total amount of from 0.5 to 10wt%, and
(ii) a sorbitan monoester selected from the group consisting of sorbitan monomyristate, sorbitan monopalmitate, sorbitan monostearate, sorbitan monoarachidate, and mixtures of two or more thereof,
wherein the baked dough comprises less than 5 wt% trans fatty acids by weight of the fatty acids present in the baked dough, and less than 45 wt% saturated fat by weight of the fatty acids present in the baked dough;
wherein the sorbitan monoester is present in an amount of from 0.2 wt% to 3 wt% of the continuous bakery portion; and
wherein the comestible product is a soft cake, a cookie or a biscuit.

The method is a method of producing the comestible product as defined in relation to the first aspect.

Preferably, the sorbitan monoester is added to the dough as a fine powder, and dispersed as a solid inside the viscous dough. As a less preferred alternative, the sorbitan monoester can be pre-melted and dispersed in the liquid state in a melted fat (added fat or melted chocolate) which is then used in the dough. The inventors have found that *in situ* melting during baking is enough, even if there is no mixing of the liquid (melted) sorbitan monoester within the liquid fat phase.

Preferably, prior to step (b), the method involves adding one or more discrete inclusions to the dough. The one or more discrete inclusions may be added during or after the formation of the dough. For example, the inclusions may be added into a mixer and then the remaining ingredients and water may be added to together form and prepare a dough. For the avoidance of doubt, any optional inclusions do not contribute to any of the ranges recited in the method described herein. For the avoidance of doubt, therefore, they are not counted in the range for the total fat content, the amount of the one or more sources of CB or CBE, or the amount of trans fatty acids or saturated fat.

Moreover, as will be appreciated for mass production of such products, the steps may be part of a continuous process. For example, mixed batches of dough may be fed to a hopper for shaping and baking. In a continuous process the dough may be conducted through the process on a conveyor system.

Preferably, the discrete inclusions are added at the end of the dough formation, especially to reduce breakage and oil migration.

The method may further comprise adding a filling and/or a partial coating, before or after baking. The filling and/or coating may comprise a source of CB or CBE.

The inventors have further found that the inclusion of a sorbitan monoester has an advantageous effect on the processing conditions which can be used in the manufacture of the comestible product. Specifically, baked products produced may be actively or passively cooled when removed from the oven. That is, the baked products may be allowed to cool under ambient conditions or may be subjected to forced cooling, such as by the passage of cooled air. Passive cooling may encompass the provision of circulating air fans, but forced or active cooling encompasses fast temperature changes such as cooling with air below 18°C (preferably < 12°C), such as in a cooling tunnel. It is possible to use successively passive cooling then active cooling: in this case, the whole process will be considered as active cooling.

It has been found that the presence of an amount of palm oil in a fat composition in a bakery portion can act to stabilize a fat blend to prevent bloom formation, provided that the baked product is subjected to forced cooling. However, if simply left to stand, then bloom formation may occur, even when palm oil is present. The inventors have found that the inclusion of a sorbitan monoester allows the final product to be either actively or passively cooled without the risk of bloom formation. This is advantageous since the option of passive cooling can lead to energy savings and reduce the production costs. It is also still efficient in case the product heats above 35°C during storage (erasing crystals), then cools back, slowly in this case. Preferably the one or more discrete inclusions, where present, are selected from nuts, jellies, nougat, honeycomb, flavoured chips such as chocolate chips, coconut, toffee, oats, seeds, caramel, fudge, hard candy, marshmallows, cherries, raisins and dried fruit, or mixtures of two or more thereof.

Preparing the dough comprises the mixing of a conventional dough containing water, cereal products such as refined or wholegrain flours, sugars, a source of fat (such as butter, shortenings, palm oil or rapeseed oil) and optionally eggs, cocoa powder or liquor or cocoa butter and baking powder. Examples of suitable recipes are well known in the art and vary depending on the specific target product. The specific components of the dough are not important in relation to the interaction of the sorbitan monoester and the formation of bloom from the source of CB and CBE.

Preferably the dough comprises a source of fat which is entirely liquid at room temperature. For the avoidance of doubt, the term "source of fat" refers to all of the added fat contained within the dough, rather than individual sources, but excluding CB/CBE inside the continuous bakery portion. Thus, the source of fat may comprise one or more different fats, such as canola oil, rapeseed oil and palm oil. Added fat correspond to the fat added pure, and do not comprise the fat coming from non-refined ingredients like flour, eggs, cheese and so on.

Preferably the source of fat of the dough has a solid fat content (SFC) of less than 5% at 25°C, preferably less than 1% at 25°C, and most preferably 0% at 20°C. Such fat compositions provide a healthy final product, but have been found to exacerbate the risk of bloom formation. Methods of measuring SFC are well known in the art, with diagnostic machines available to measure the SFC of any fat composition. SFC values are measured according to the ISO-8292-1 D (non-stabilising, direct) measurement standard.

Preferably the dough does not contain polyols.

Preferably the step of preparing the dough further includes shaping the dough into individual portions. This may be by wire cutting and or by rotary moulding, for example. The step of splitting or forming the dough in discrete pieces preferably takes place before the step of baking the dough for products such as biscuits and soft cakes. The step of splitting or forming the dough in discrete pieces can also takes place after the step of baking the dough for products such as brownies and layer cakes. Some products, like Brownies, can be done both way, depending on whether the product is to be baked in a mould or on the oven band or plates.

The baking step may be at temperatures of up to 200°C or even higher and for durations of from 1 to 20 minutes or more, time depending on size and baking temperature, as well as initial and final water content. Such baking conditions may be sufficiently harsh to favour fat migration and bloom formation.

Preferably the baked comestible products are allowed to passively cool after baking. That is, preferably the baked comestible products are not actively cooled.

Alternatively, the baked comestible products may be submitted to forced air. Where a partial covering with chocolate is to be performed, this requires cooling of the base cake to reach 25-30°C before the chocolate coating.

Preferably the method further comprises packaging the product, optionally singularly.

Preferably, packaging takes place with a product temperature below 35°C, preferably between from 0 to 35°C, more preferably 16 to 35°C, preferably 17 to 30°C, preferably 18 to 25°C and 20 to 25°C. This may require air conditioning. For cheaper manufacturing process, air conditioning at the packaging stage may be avoided, and preferably the product is packed when its surface reach 24 to 30°C, preferably 25 to 27°C.

Preferably the baked comestible product is shelf stable for at least 2 weeks, preferably at least 4 weeks, preferably at least 2 months, preferably at least 3 months, more preferably 6, even more preferably 9 months when stored at 20°C. That is, the product remains fresh and without bloom on the surface of the continuous bakery portion for at least this period when stored at 20°C. As will be appreciated, high storage temperatures can cause excessive risk of bloom. However, the product described herein can be kept at ambient temperatures, *i.e.* without refrigeration, without developing bloom on a surface of the continuous bakery portion.

According to a further aspect there is provided the use of a sorbitan monoester in a continuous bakery portion of a comestible product comprising a source of cocoa butter or cocoa butter equivalent in the continuous bakery portion, to prevent fat bloom on a surface of the continuous bakery portion,
wherein the sorbitan monoester is selected from the group consisting of sorbitan monomyristate, sorbitan monopalmitate, sorbitan monostearate, sorbitan monoarachidate, and mixtures of two or more thereof, and
wherein the comestible product is a soft cake, a cookie or a biscuit.

By prevent fat bloom it is meant that no visible fat bloom occurs in the comestible product after 4 weeks storage at 20°C, more preferably no fat bloom has occurred in after 8 weeks and even more preferably after 6 months.

The comestible products, inclusions, coatings, fillings or the like discussed herein may be described as being or containing chocolate, even when they include cocoa butter equivalent (CBE) even though such products may not be sold as chocolate in some jurisdictions.

Preferably, the one or more sources of cocoa butter are present in the continuous bakery portion and/or the one or more discrete inclusions.

The comestible product comprises less than 45 wt% saturated fat by weight of the fatty acids present in the comestible product, more preferably less than 30 wt% saturated fat by weight of the fatty acids present in the continuous bakery portion, still more preferably less than 22 wt%, and most preferably less than 17 wt%. Preferably, the comestible product comprises at least 10 wt% saturated fat by weight of the fatty acids present in the comestible product, more preferably at least 15 wt%.

Preferably, the comestible product comprises less than 3 wt% trans fatty acids by weight of the fatty acids present in the comestible product, preferably less than 1 wt%.

Preferably, the comestible product comprises a source of fat selected from the group consisting of non-hydrogenated canola oil, non-hydrogenated rapeseed oil, non-hydrogenated palm oil, non-hydrogenated shea olein, non-hydrogenated sunflower oil, non-hydrogenated corn oil, non-hydrogenated soybean oil, and mixtures of two or more thereof.

Preferably, the comestible product does not comprise a partially hydrogenated fat or oil.

### Figures

The present disclosure will be described in relation to the following non-limiting figures, in which:
Figure 1 shows the results of a test of the effect of cocoa butter content in rapeseed oil on blooming. The x axis shows the weight of CB (g) for 100g of rapeseed.
Figures 2A and 2B show the results of a test of including palm oil in rapeseed oil on CB blooming after 21 and 26 weeks of storage at 20°C.
Figure 3 shows the results of a test of including sorbitan monostearate in rapeseed oil on blooming of CB.

### Examples

The present disclosure will be described in relation to the following non-limiting examples.

The relative stability of the fat phase was investigated assuming different levels of cocoa butter mixing and different conditioning (either stored directly at 20°C or first chilled at 5°C for 2 hours). This approach assesses the critical amount of cocoa butter required for recrystallisation in the dough fat (rapeseed) and the impact of other stabilisers without the need to wait several months for the exchange of fats between dough and the source of cocoa butter or cocoa butter equivalent.

All the model systems exclude the interaction of sugar/starch/flour/dough structure and focus on the recrystallisation of the cocoa butter influenced by cocoa butter concentration compared to the concentration of the other fats and oils, emulsifier/surfactant interactions, and stabilisation by a crystal network. Although in a real baked product there will be some interaction between the fat and the flour, sugar and other ingredients, it is known in the art that fat only models provide a good reflection of the behaviour of the fat phase. The models used therefore provide strong evidence of the effectiveness of the components investigated.

The composition of the model fat blends is given in the Table 1 below:

| **Fat component %** | **A** | **B** | **C** | **D** | **E** |
|---|---|---|---|---|---|
| Rapeseed | 85.42 | 82.83 | 80.39 | 78.10 | 67.21 |
| Lecithin | 2.08 | 2.02 | 1.96 | 1.90 | 1.64 |
| Cocoa butter | 12.50 | 15.15 | 17.65 | 20.00 | 14.75 |
| Palm | | | | | 16.39 |
| Grams of CB per 100g of rapeseed | 14.6 | 18.3 | 22.0 | 25.6 | 21.9 |

### Example 1

The objective of the first test was to understand the critical level of cocoa butter (CB) required in the dough's fat phase for fat bloom to develop.

The effect of cocoa butter concentration on blooming was modelled using the fat compositions A - D in Table 1. The fat compositions were heated to 65°C to ensure all components were fully melted and mixed. A 10g sample of each composition was added to separate Petri dishes and chilled at 5°C for two hours before being stored at 20°C. A second 10g sample of each composition was added to separate Petri dishes and directly stored at 20°C. All the samples were stored at ambient conditions for 21 weeks.

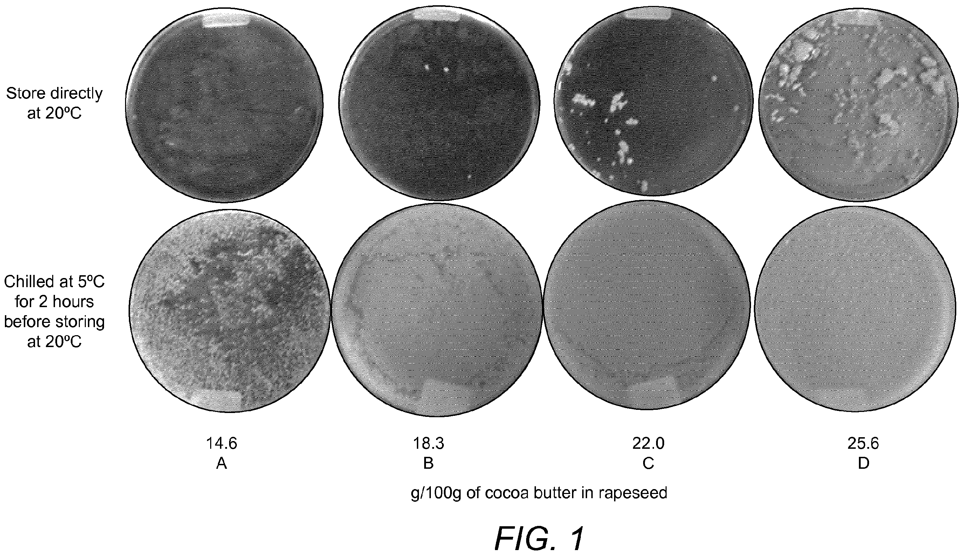

As shown in Figure 1, bloom occurred in the non-pre-chilled samples of compositions B, C and D which is clearly shown by the non-uniform formation of crystal structures. The pre-chilled sample of composition A had formed a stable, uniform structure and due to the low concentration of crystallising fat the overall appearance may look inhomogeneous, but on closer inspection it can be concluded that the product structure is not the same as a bloomed sample. The pre-chilled samples of compositions B, C and D all formed a uniform stable crystal structure.

Ambient cooling clearly shows the relationship between CB concentration and the likelihood of recrystallisation. The critical concentration required for fat bloom at 20°C is approximately 18.3g of CB /100g of rapeseed.

Pre-chilling the fat phase has shown to create a more uniform crystal structure for all but the lowest level tested where there is insufficient crystalline fat to form a continuous network (explained above). This uniform crystal structure is not expected to translate into fat bloom in finished product.

### Example 2

The objective of the second test was to understand whether changing the fat phase in a cookie from 100% rapeseed to an 80/20 rapeseed/palm oil mix could prevent the development of fat bloom.

The effect of palm oil as a crystal stabiliser was investigated using composition E given in table 1 and the method of example 1.

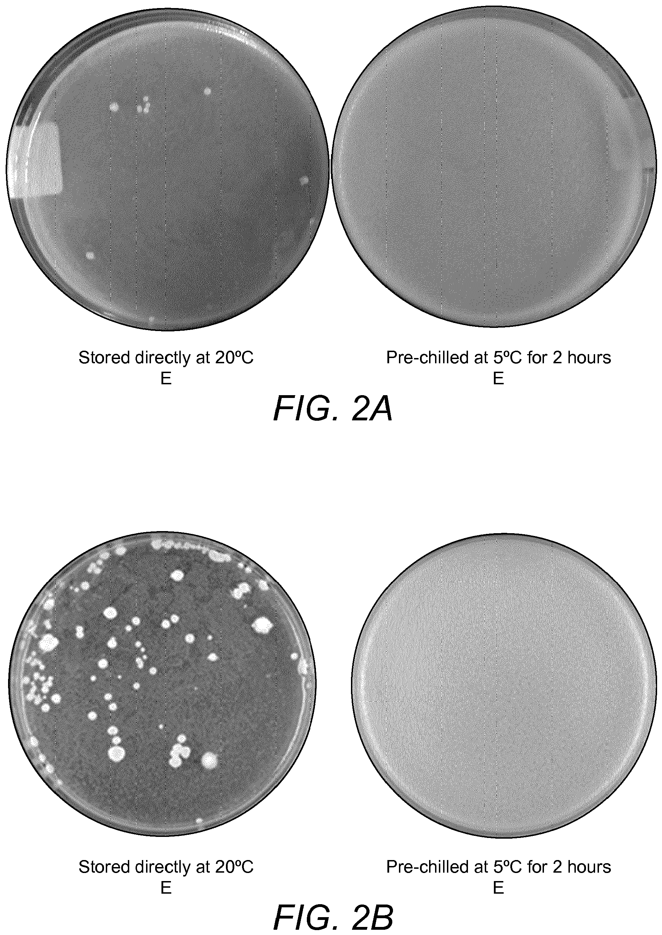

As shown in Figure 2A, the non-pre-chilled sample showed bloom clusters after 21 weeks while the pre-chilled sample formed a stable, uniform structure (Figure 2B showing the same trials and results, with a picture taken after 26 weeks). It is noted that the bloom clusters were already visible at 4 weeks for the non-pre-chilled sample.

The blending of palm oil with rapeseed is able to mitigate the development of fat bloom only if the palm containing product is pre-chilled. If this fat blend is left to cool in ambient conditions fat bloom will develop.

### Example 3

The objective of the third test was to understand whether the addition of sorbitan monostearate (SMS) could prevent the development of fat bloom in a comestible product containing a source of CB/CBE in the continuous bakery portion.

The effect of SMS as a crystal stabiliser was investigated using compositions F and G given in Table 2 below using the method of Example 1.

| **Fat component %** | **F** | **G** |
|---|---|---|
| Rapeseed | 78.10 | 73.21 |
| Lecithin | 1.90 | 1.79 |
| Cocoa butter | 17.14 | 16.07 |
| SMS | 2.86 | 8.93 |
| Grams of CB per 100g of rapeseed | 21.9 | 21.9 |

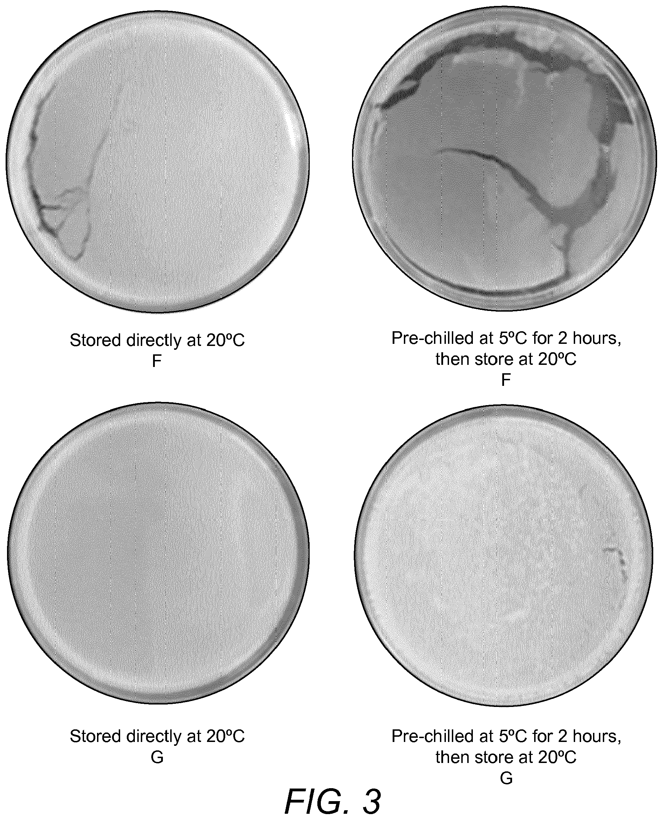

As shown in Figure 3, none of the four samples showed fat bloom clusters after 4 weeks of storage (time of the picture) and have remained bloom free up to and beyond 26 weeks of storage (when the keeping test was stopped).

In all conditions tested the SMS was able to inhibit crystal growth. The independence from conditioning *i.e*. chilled or ambient provides a flexible solution that may be suited to process variability.

When the fat phase of composition F and G makes 10.7% of a biscuit (including CB from cocoa powder), then the SMS concentration in the biscuit is 0.3 and 1% (rounded) respectively.

### Example 4

The effectiveness of the invention has been demonstrated in a formulation of a dry biscuit for breakfast. The formulas tested are given below:

| | Invention with SMS | Control (comparative) |
|---|---|---|
| Ingredient | Wt% in Dough | Wt% in Dough |
| 2. Refined soft wheat flour | 31.4 | 31.4 |
| 2. Wheat bran and germ | 3.0 | 3.0 |
| 2. Whole grain spelt flour | 0.95 | 0.95 |
| 2. Whole grain rye flour | 3.2 | 3.2 |
| 2. Whole grain barley flour | 5.7 | 5.7 |
| 2. Whole grain oat flakes | 7.9 | 7.9 |
| 1. Sucrose | 16.9 | 16.9 |
| **1.Rapeseed oil** | **8.04** | **8.44** |
| 1. Added Water | 6.4 | 6.4 |
| 1. Cocoa Powder (11% fat) | 3.0 | 3.0 |
| 3. Chocolate Drops (26% fat) | 11.3 | 11.3 |
| **1. Sorbitan Monostearate (SMS)** | **0.4** | **0** |
| 1. Flavouring powder | 0.27 | 0.27 |
| 1. Emulsifier | 0.33 | 0.33 |
| 1. Salt | 0.25 | 0.25 |
| 1. Leavening Agent | 0.80 | 0.80 |
| 2. Vitamin and mineral blend | 0.16 | 0.16 |
| TOTAL | 100 | 100 |
| Relative wt% after baking | Between 86.6 and 87.7 | Between 86.6 and 87.7 |

The rapeseed oil contained 7 wt% saturated fat and 0.7 wt% trans fatty acids by weight of the fatty acids present in the rapeseed oil. The continuous bakery portion of the formulation in accordance with the invention comprised 12 wt% saturated fat and 0.6 wt% trans fatty acids by weight of the fatty acids present in the continuous bakery portion.

The ingredients of the dough were mixed together in a Hobart mixer with paddle in 3 steps:
- Step 1: add all ingredients starting with "1."in the bowl and premix 3 min at speed 2
- Step 2: premix all ingredients (dry) starting with "2." with a suitable way. Then add them in the bowl after step 1 and mix in speed 1 for 3 minutes.
- Step 3: add chocolate drops and mix 50 seconds at speed 1.

All ingredients are at room temperature (20 to 25°C) except water and oil stored at 33°C.

The SMS (reference Grindsted SMS B from Danisco supplier) was added directly as a powder, without pre-melting. Particle size distribution (measured by a Malvern Mastersizer 2000 laser granulometry) is D50 = 220 µm and D90 = 444 µm (i.e. 90% of particle < 444 µm).

The dough has a homogenous consistency and a temperature of 28-29°C after step 3. It was kept at 29°C for 20 min before forming.

Then, the dough is fed into the hopper of the rotary moulder for forming the biscuits. The dough was fed so that the moulding and grooved cylinders of the rotary moulder are nearly visible. The speed differential of the moulding and grooved cylinder is kept below 10 %. Ambient temperature was 24°C and the exit temperature for dough pieces was 25 to 26°C.

The dough pieces were then baked in a continuous oven for 6.5 min at 150 to 200°C (gradient in the oven, the higher temperature at the centre). During baking the temperature of the dough remained under 160 °C. At the end of baking the moisture content was 1.3% and biscuit pieces weight was 12.5 g each.

When the biscuits are taken out from the oven, they are allowed to cool down passively on a wire net at a room temperature of 18-19°C for 2 hours. Then they were packed by 4 biscuits in transparent hermetic flow-packs.

Samples were stored at 18 to 20°C for 3 days. They were then held under one of the following keeping test conditions:
a) 15°C +/-1°C
b) 29°C 3 days, then 15°C +/-1°C
c) 18°C +/-1°C
d) 29°C 3 days, then 18°C +/-1°C
e) 4°C 3 days, then 18°C +/-1°C
f) 25°C +/-1°C
g) 4°C 3 days, then 25°C +/-1°C
h) Variable temperature in warehouse (uncontrolled, typically 15-20°C).
i) Variable temperature in office (uncontrolled, typically 20-26°C).

At least 10 transparent flow packs of 4 biscuits were used for each condition.

The appearance of bloom, i.e. white dots (could be like very small snow-like fat crystals or more spherical crystals) made by the fractionation / crystallisation of the fat (cocoa butter) on the base biscuit was assessed once a week for all conditions by naked eye in good light conditions. Observations were taken over a period of 13 weeks of storage.

Biscuit samples containing 0.4% SMS exhibited *no signs of bloom* for 13 weeks of observations at all storage conditions.

On the contrary, control biscuits did bloom quickly in several test conditions and are not acceptable for a consumer:
- Conditions a) and h) lead to a start of bloom after 6 weeks and *highly visible bloom* after 12 weeks.
- Condition b) lead to a start of bloom after 6 weeks and *highly visible bloom* after 10 weeks.
- Condition c) lead to a start of bloom after 7 weeks. Bloom was very obvious from 9 to 13 weeks, but less than for conditions a) and d).
- Condition d) also lead to a start of bloom after 7 weeks but bloom stays at this level up to 13 weeks.
- Conditions e) to g) did not bloom for 13 weeks
- Condition i) lead to a start of bloom after 12 weeks, probably because the temperature was initially quite high then started to drop in winter.

Unlike chocolate, the storage temperature of chocolate chip cookies is not controlled. So it is important we can avoid the fat bloom in a large range of temperature. We have tested here the exposure of biscuits from 4 to 29°C, with long storage at 15 to 25°C. Only the biscuit according to the invention, with 0.4% SMS is passing these tests without bloom, and the difference with the control is significant.

Note that even if a first cooling at 4°C prevents bloom in condition e), this is not safe because during summer, it is very likely that the biscuits will be exposed to high temperature (e.g. in a car) melting the fat, which will then cool back slowly, and this slow cooling will bring fat bloom.

## Claims

1. A comestible product comprising a continuous bakery portion and, optionally, one or more discrete inclusions,
wherein the continuous bakery portion has a total fat content of less than 30 wt% and comprises:
(i) one or more sources of cocoa butter or cocoa butter equivalent in a total amount of from 0.5 to 10 wt%, and
(ii) a sorbitan monoester selected from the group consisting of sorbitan monomyristate, sorbitan monopalmitate, sorbitan monostearate, sorbitan monoarachidate, and mixtures of two or more thereof,
wherein the continuous bakery portion comprises less than 5 wt% trans fatty acids by weight of the fatty acids present in the continuous bakery portion, and less than 45 wt% saturated fat by weight of the fatty acids present in the continuous bakery portion,
wherein the sorbitan monoester is present in an amount of from 0.2 wt% to 3 wt% of the continuous bakery portion, and
wherein the comestible product is a soft cake, a cookie or a biscuit.

2. A comestible product according to claim 1 wherein the continuous bakery portion comprises less than 3 wt% trans fatty acids by weight of the fatty acids present in the continuous bakery portion, preferably less than 1 wt%.

3. A comestible product according to claim 1 or claim 2, wherein the continuous bakery portion comprises a source of fat selected from the group consisting of non-hydrogenated canola oil, non-hydrogenated rapeseed oil, non-hydrogenated palm oil, non-hydrogenated shea olein, non-hydrogenated sunflower oil, non-hydrogenated corn oil, non-hydrogenated soybean oil, and mixtures of two or more thereof.

4. A comestible product according to any of the preceding claims, wherein the continuous bakery portion does not comprise a partially hydrogenated fat or oil.

5. A comestible product according to any of the preceding claims wherein the continuous bakery portion comprises less than 40 wt% saturated fat by weight of the fatty acids present in the continuous bakery portion, preferably less than 35 wt%, more preferably less than 27 wt%, still more preferably less than 22 wt%, and most preferably less than 15 wt%.

6. A comestible product according to any of the preceding claims, wherein the comestible product has a moisture content of less than 6 wt%, preferably less than 3 wt%.

7. A comestible product according to any of the preceding claims, wherein the one or more sources of cocoa butter or cocoa butter equivalent comprise cocoa powder or defatted cocoa powder, preferably alkalized defatted cocoa powder.

8. A comestible product according to any of the preceding claims, wherein the one or more discrete inclusions comprises a source of cocoa butter or cocoa butter equivalent, and preferably wherein the source of cocoa butter or cocoa butter equivalent comprises chocolate and/or chocolate compounds.

9. A comestible product according to any of the preceding claims, wherein the sorbitan monoester is present in an amount of from 0.3 to 1.0 wt%.

10. A comestible product according to any of the preceding claims, wherein the one or more sources of cocoa butter or cocoa butter equivalent are present in a total amount of from 1 to 10 wt% by weight of the continuous bakery portion, preferably from 2 to 8 wt%.

11. A comestible product according to any of the preceding claims, wherein the continuous bakery portion has a total fat content of at least 20 wt%, preferably at least 24 wt%.

12. A method of producing a comestible product according to any one of claims 1 to 11, the method comprising:
(a) preparing a dough, and
(b) baking the dough to form one or more comestible products,
wherein the baked dough has a total fat content of less than 30 wt% and comprises:
(i) one or more sources of cocoa butter or cocoa butter equivalent in a total amount of from 0.5 to 10 wt%, and
(ii) a sorbitan monoester selected from the group consisting of sorbitan monomyristate, sorbitan monopalmitate, sorbitan monostearate, sorbitan monoarachidate, and mixtures of two or more thereof,
wherein the baked dough comprises less than 5 wt% trans fatty acids by weight of the fatty acids present in the baked dough, and less than 45 wt% saturated fat by weight of the fatty acids present in the baked dough;
wherein the sorbitan monoester is present in an amount of from 0.2 wt% to 3 wt% of the continuous bakery portion; and
wherein the comestible product is a soft cake, a cookie or a biscuit.

13. A method according to claim 12, wherein the dough comprises a source of fat, wherein the source of fat has a solid fat content (SFC) of less than 5% at 25ºC.

14. Use of a sorbitan monoester in a continuous bakery portion of a comestible product comprising a source of cocoa butter or cocoa butter equivalent in the continuous bakery portion, to prevent fat bloom on a surface of the continuous bakery portion,
wherein the sorbitan monoester is selected from the group consisting of sorbitan monomyristate, sorbitan monopalmitate, sorbitan monostearate, sorbitan monoarachidate, and mixtures of two or more thereof, and
wherein the comestible product is a soft cake, a cookie or a biscuit.

## Patentansprüche

1. Lebensmittelprodukt, umfassend einen kontinuierlichen Backwarenanteil und optional einen oder mehrere separate Einschlüsse,
wobei der kontinuierliche Backwarenanteil einen Gesamtfettgehalt von weniger als 30 Gew.-% aufweist und Folgendes umfasst:
(i) eine oder mehrere Quellen von Kakaobutter oder Kakaobutteräquivalent in einer Gesamtmenge von 0,5 bis 10 Gew.-% und
(ii) einen Sorbitanmonoester, ausgewählt aus der Gruppe, bestehend aus Sorbitanmonomyristat, Sorbitanmonopalmitat, Sorbitanmonostearat, Sorbitanmonoarachidat und Gemischen von zwei oder mehr davon,
wobei der kontinuierliche Backwarenanteil zu weniger als 5 Gew.-% trans-Fettsäuren, bezogen auf das Gewicht der im kontinuierlichen Backwarenanteil vorhandenen Fettsäuren, und zu weniger als 45 Gew.-% gesättigtes Fett, bezogen auf das Gewicht der im kontinuierlichen Backwarenanteil vorhandenen Fettsäuren, umfasst,
wobei der Sorbitanmonoester in einer Menge von 0,2 Gew.-% bis 3 Gew.-% des kontinuierlichen Backwarenanteils vorhanden ist und
wobei das Lebensmittelprodukt ein Weichkuchen, ein Keks oder ein Plätzchen ist.

2. Lebensmittelprodukt nach Anspruch 1, wobei der kontinuierliche Backwarenanteil zu weniger als 3 Gew.-% trans-Fettsäuren, bezogen auf das Gewicht der im kontinuierlichen Backwarenanteil vorhandenen Fettsäuren, umfasst, vorzugsweise zu weniger als 1 Gew.-%.

3. Lebensmittelprodukt nach Anspruch 1 oder Anspruch 2, wobei der kontinuierliche Backwarenanteil eine Fettquelle umfasst, die ausgewählt ist aus der Gruppe, bestehend aus ungehärtetem Canolaöl, ungehärtetem Rapsöl, ungehärtetem Palmöl, ungehärtetem Sheaolein, ungehärtetem Sonnenblumenöl, ungehärtetem Maisöl, ungehärtetem Sojabohnenöl und Gemischen von zwei oder mehr davon.

4. Lebensmittelprodukt nach einem der vorstehenden Ansprüche, wobei der kontinuierliche Backwarenanteil kein teilweise gehärtetes Fett oder Öl umfasst.

5. Lebensmittelprodukt nach einem der vorstehenden Ansprüche, wobei der kontinuierliche Backwarenanteil zu weniger als 40 Gew.-% gesättigtes Fett, bezogen auf das Gewicht der im kontinuierlichen Backwarenanteil vorhandenen Fettsäuren, umfasst, vorzugsweise zu weniger als 35 Gew.-%, mehr bevorzugt zu weniger als 27 Gew.-%, noch mehr bevorzugt zu weniger als 22 Gew.-% und am meisten bevorzugt zu weniger als 15 Gew.-%.

6. Lebensmittelprodukt nach einem der vorstehenden Ansprüche, wobei das Lebensmittelprodukt einen Feuchtigkeitsgehalt von weniger als 6 Gew.-%, vorzugsweise weniger als 3 Gew.-%, aufweist.

7. Lebensmittelprodukt nach einem der vorstehenden Ansprüche, wobei die eine oder die mehreren Quellen von Kakaobutter oder Kakaobutteräquivalent Kakaopulver oder entfettetes Kakaopulver, vorzugsweise alkalisiertes entfettetes Kakaopulver, umfassen.

8. Lebensmittelprodukt nach einem der vorstehenden Ansprüche, wobei der eine oder die mehreren separaten Einschlüsse eine Quelle von Kakaobutter oder Kakaobutteräquivalent umfassen und wobei vorzugsweise die Quelle von Kakaobutter oder Kakaobutteräquivalent Schokolade und/oder Schokoladenverbindungen umfasst.

9. Lebensmittelprodukt nach einem der vorstehenden Ansprüche, wobei der Sorbitanmonoester in einer Menge von 0,3 bis 1,0 Gew.-% vorhanden ist.

10. Lebensmittelprodukt nach einem der vorstehenden Ansprüche, wobei die eine oder mehreren Quellen von Kakaobutter oder Kakaobutteräquivalent in einer Gesamtmenge von 1 bis 10 Gew.-% des kontinuierlichen Backwarenanteils, vorzugsweise von 2 bis 8 Gew.-%, vorhanden sind.

11. Lebensmittelprodukt nach einem der vorstehenden Ansprüche, wobei der kontinuierliche Backwarenanteil einen Gesamtfettgehalt von mindestens 20 Gew.-%, vorzugsweise mindestens 24 Gew.-%, aufweist.

12. Verfahren zum Herstellen eines Lebensmittelprodukts nach einem der Ansprüche 1 bis 11, wobei das Verfahren umfasst:
(a) Zubereiten eines Teigs und
(b) Backen des Teigs, um ein oder mehrere Lebensmittelprodukte zu bilden,
wobei der gebackene Teig einen Gesamtfettgehalt von weniger als 30 Gew.-% aufweist und Folgendes umfasst:
(i) eine oder mehrere Quellen von Kakaobutter oder Kakaobutteräquivalent in einer Gesamtmenge von 0,5 bis 10 Gew.-% und
(ii) einen Sorbitanmonoester, ausgewählt aus der Gruppe, bestehend aus Sorbitanmonomyristat, Sorbitanmonopalmitat, Sorbitanmonostearat, Sorbitanmonoarachidat und Gemischen von zwei oder mehr davon,
wobei der gebackene Teig zu weniger als 5 Gew.-% trans-Fettsäuren, bezogen auf das Gewicht der im gebackenen Teig vorhandenen Fettsäuren, und zu weniger als 45 Gew.-% gesättigtes Fett, bezogen auf das Gewicht der im gebackenen Teig vorhandenen Fettsäuren, umfasst;
wobei der Sorbitanmonoester in einer Menge von 0,2 Gew.-% bis 3 Gew.-% des kontinuierlichen Backwarenanteils vorhanden ist; und
wobei das Lebensmittelprodukt ein Weichkuchen, ein Keks oder ein Plätzchen ist.

13. Verfahren nach Anspruch 12, wobei der Teig eine Fettquelle umfasst, wobei die Fettquelle einen Festfettgehalt (SFC) von weniger als 5 % bei 25 °C aufweist.

14. Verwendung eines Sorbitanmonoesters in einem kontinuierlichen Backwarenanteil eines Lebensmittelprodukts, das eine Quelle von Kakaobutter oder Kakaobutteräquivalent im kontinuierlichen Backwarenanteil umfasst, um Fettreif auf einer Oberfläche des kontinuierlichen Backwarenanteils zu verhindern,
wobei der Sorbitanmonoester ausgewählt ist aus der Gruppe, bestehend aus Sorbitanmonomyristat, Sorbitanmonopalmitat, Sorbitanmonostearat, Sorbitanmonoarachidat und Gemischen von zwei oder mehr davon, und
wobei das Lebensmittelprodukt ein Weichkuchen, ein Keks oder ein Plätzchen ist.

## Revendications

1. Produit comestible comprenant une partie continue de boulangerie et, facultativement, une ou plusieurs inclusions distinctes,
dans lequel la partie continue de boulangerie a une teneur totale en matières grasses inférieure à 30 % en poids et comprend :
(i) une ou plusieurs sources de beurre de cacao ou d'équivalent de beurre de cacao en une quantité totale allant de 0,5 à 10 % en poids, et
(ii) un monoester de sorbitan choisi dans le groupe constitué de monomyristate de sorbitan, monopalmitate de sorbitan, monostéarate de sorbitan, monoarachidate de sorbitan, et des mélanges de deux de ceux-ci ou plus,
dans lequel la partie continue de boulangerie comprend moins de 5 % en poids d'acides gras trans en poids des acides gras présents dans la partie continue de boulangerie, et moins de 45 % en poids de matière grasse saturée en poids des acides gras présents dans la partie continue de boulangerie,
dans lequel le monoester de sorbitan est présent en une quantité allant de 0,2 % en poids à 3 % en poids de la partie continue de boulangerie, et
dans lequel le produit comestible est un gâteau moelleux, un biscuit sucré ou un biscuit.

2. Produit comestible selon la revendication 1 dans lequel la partie continue de boulangerie comprend moins de 3 % en poids d'acides gras trans en poids des acides gras présents dans la partie continue de boulangerie, de préférence moins de 1 % en poids.

3. Produit comestible selon la revendication 1 ou la revendication 2, dans lequel la partie continue de boulangerie comprend une source de matière grasse choisie dans le groupe constitué d'huile de canola non hydrogénée, huile de colza non hydrogénée, huile de palme non hydrogénée, oléine de karité non hydrogénée, huile de tournesol non hydrogénée, huile de maïs non hydrogénée, huile de soja non hydrogénée, et des mélanges de deux de celles-ci ou plus.

4. Produit comestible selon l'une quelconque des revendications précédentes, dans lequel la partie continue de boulangerie ne comprend pas de matière grasse ou huile partiellement hydrogénée.

5. Produit comestible selon l'une quelconque des revendications précédentes dans lequel la partie continue de boulangerie comprend moins de 40 % en poids de matière grasse saturée en poids des acides gras présents dans la partie continue de boulangerie, de préférence moins de 35 % en poids, plus préférablement moins de 27 % en poids, encore plus préférablement moins de 22 % en poids, et le plus préférablement moins de 15 % en poids.

6. Produit comestible selon l'une quelconque des revendications précédentes, dans lequel le produit comestible a une teneur en humidité inférieure à 6 % en poids, de préférence inférieure à 3 % en poids.

7. Produit comestible selon l'une quelconque des revendications précédentes, dans lequel la ou les sources de beurre de cacao ou d'équivalent de beurre de cacao comprennent de la poudre de cacao ou de la poudre de cacao dégraissé, de préférence de la poudre de cacao dégraissé alcalinisé.

8. Produit comestible selon l'une quelconque des revendications précédentes, dans lequel la ou les inclusions distinctes comprennent une source de beurre de cacao ou d'équivalent de beurre de cacao, et de préférence dans lequel la source de beurre de cacao ou d'équivalent de beurre de cacao comprend du chocolat et/ou des composés de chocolat.

9. Produit comestible selon l'une quelconque des revendications précédentes, dans lequel le monoester de sorbitan est présent en une quantité allant de 0,3 à 1,0 % en poids.

10. Produit comestible selon l'une quelconque des revendications précédentes, dans lequel la ou les sources de beurre de cacao ou d'équivalent de beurre de cacao sont présentes en une quantité totale allant de 1 à 10 % en poids par rapport au poids de la partie continue de boulangerie, de préférence de 2 à 8 % en poids.

11. Produit comestible selon l'une quelconque des revendications précédentes, dans lequel la partie continue de boulangerie a une teneur totale en matières grasses d'au moins 20 % en poids, de préférence au moins 24 % en poids.

12. Procédé de production d'un produit comestible selon l'une quelconque des revendications 1 à 11, le procédé comprenant :
(a) la préparation d'une pâte, et
(b) la cuisson au four de la pâte pour former un ou plusieurs produits comestibles,
dans lequel la pâte cuite a une teneur totale en matières grasses inférieure à 30 % en poids et comprend :
(i) une ou plusieurs sources de beurre de cacao ou d'équivalent de beurre de cacao en une quantité totale allant de 0,5 à 10 % en poids, et
(ii) un monoester de sorbitan choisi dans le groupe constitué de monomyristate de sorbitan, monopalmitate de sorbitan, monostéarate de sorbitan, monoarachidate de sorbitan, et des mélanges de deux de ceux-ci ou plus,
dans lequel la pâte cuite comprend moins de 5 % en poids d'acides gras trans en poids des acides gras présents dans la pâte cuite, et moins de 45 % en poids de matière grasse saturée en poids des acides gras présents dans la pâte cuite ;
dans lequel le monoester de sorbitan est présent en une quantité allant de 0,2 % en poids à 3 % en poids de la partie continue de boulangerie ; et
dans lequel le produit comestible est un gâteau moelleux, un biscuit sucré ou un biscuit.

13. Procédé selon la revendication 12, dans lequel la pâte comprend une source de matière grasse, dans lequel la source de matière grasse a une teneur en matière grasse solide (SFC) inférieure à 5 % à 25 °C.

14. Utilisation d'un monoester de sorbitan dans une partie continue de boulangerie d'un produit comestible comprenant une source de beurre de cacao ou d'équivalent de beurre de cacao dans la partie continue de boulangerie, pour empêcher un blanchiment gras sur une surface de la partie continue de boulangerie,
dans lequel le monoester de sorbitan est choisi dans le groupe constitué de monomyristate de sorbitan, monopalmitate de sorbitan, monostéarate de sorbitan, monoarachidate de sorbitan, et des mélanges de deux de ceux-ci ou plus, et
dans lequel le produit comestible est un gâteau moelleux, un biscuit sucré ou un biscuit.
